(19) Europäisches Patentamt

European Patent Office

Office européen des brevets

(11) Numéro de publication : **0 304 356 B1**

(12) **FASCICULE DE BREVET EUROPEEN**

(45) Date de publication du fascicule du brevet :
03.04.91 Bulletin 91/14

(21) Numéro de dépôt : 88401899.5

(22) Date de dépôt : 22.07.88

(51) Int. Cl.⁵ : **F16D 66/02**

(54) **Témoin d'usure d'organe de friction pour frein de véhicule automobile et organe de friction équipé de ce témoin.**

(30) Priorité : 24.07.87 FR 8710538

(43) Date de publication de la demande :
22.02.89 Bulletin 89/08

(45) Mention de la délivrance du brevet :
03.04.91 Bulletin 91/14

(84) Etats contractants désignés :
**BE DE ES FR GB IT**

(56) Documents cités :
**EP-A- 0 227 538**
**DE-A- 2 257 250**
**FR-A- 2 183 379**
**FR-A- 2 403 490**
**FR-A- 2 418 387**
**FR-A- 2 450 979**
**US-A- 3 716 113**
**US-A- 4 016 533**

(73) Titulaire : **BENDIX EUROPE Services**
**Techniques S.A.**
**126 rue de Stalingrad**
**F-93700 Drancy (FR)**

(72) Inventeur : **Fargier, Eric**
**13, Avenue du Maréchal Foch**
**F-93360 Neuilly-Plaisance (FR)**
Inventeur : **Mery, Jean-Claude**
**61, rue E. Zola**
**F-93320 Pavillon-sous Bois (FR)**

(74) Mandataire : **Lejet, Christian**
**Bendix Europe Service Techniques Service**
**Brevets 126 rue de Stalingrad**
**F-93700 Drancy (FR)**

## Description

La présente invention est relative à un témoin d'usure d'organe de friction et, plus particulièrement, à un tel témoin conçu pour équiper un organe de friction de frein à disque ou à tambour pour véhicule automobile.

On connait de tels témoins qui procèdent par mise à la masse du véhicule d'un conducteur électrique lorsque l'épaisseur d'une garniture de l'organe de friction, perpendiculairement à son plan d'usure, devient inférieure à une valeur prédéterminée en dessous de laquelle la qualité et la fiabilité du freinage sont considérées comme inacceptables. Cette mise à la masse résulte ordinairement de l'usure d'une gaine protégeant le conducteur, par un disque ou tambour métallique solidaire en rotation d'une roue de véhicule et formant partie du frein, le conducteur étant alors mis en contact avec ce disque ou tambour. Un circuit électrique sensible à la mise à la masse du conducteur commande alors le passage d'un courant dans le conducteur, courant qui provoque l'allumage d'un voyant. Ce signal prévient l'utilisateur du véhicule de ce que l'organe de friction est usé et doit donc être remplacé.

Du fait qu'un courant ne peut passer dans le conducteur qu'après une mise à la masse, il n'est pas possible de tester le bon fonctionnement du circuit et du voyant avant que l'organe de friction n'ait atteint son usure limite.

Pour pallier cet inconvénient on a conçu des témoins d'usure dans lesquels le conducteur électrique forme une boucle qui est coupée lorsque l'usure limite de l'organe de friction associé est atteinte. La continuité électrique de la boucle peut alors être testée à tout moment avant la rupture de cette boucle.

La présente invention a pour but de réaliser un témoin d'usure de ce type, qui assure une rupture nette de la boucle quand l'usure limite de l'organe de friction associé est atteinte, qui est de mise en place facile et sûre et de réalisation peu coûteuse.

L'invention concerne donc un témoin d'usure d'un organe de friction pour frein de véhicule automobiles, conçu pour être monté sur l'organe de friction de manière qu'un organe conducteur de l'électricité formant partie du témoin soit attaqué par une pièce rotative formant partie du frein quand l'organe de friction atteint une épaisseur inférieure à une valeur prédéterminée du fait de son usure par cette pièce rotative, l'organe conducteur passant tangentiellement dans le plan d'usure maximale tolérée de l'organe de friction, et comprenant deux conducteurs électriques coaxiaux.

Le document DE-A-2 257 250 décrit un tel témoin d'usure. Dans la partie d'usure du témoin, les deux conducteurs sont séparés l'un de l'autre par une gaine présentant une certaine résistance de manière à ce qu'il soit possible de vérifier dans certaines conditions la continuité électrique des deux conducteurs, alors qu'en fonctionnement sans usure, cette résistance permet de ne pas obtenir d'indication d'avertissement, cette indication n'étant obtenue que lorsque les deux conducteurs sont en liaison électrique à travers le disque de frein.

Selon l'invention, les deux conducteurs sont constitués l'un d'une âme conductrice protégée par une enveloppe isolante, l'autre d'une gaine conductrice entourant l'enveloppe isolante, ces deux conducteurs étant reliés l'un à l'autre au moyen d'une douille électriquement conductrice entourant la gaine conductrice et en contact avec l'âme conductrice.

Au dessin annexé, donné seulement à titre d'exemple :

- la figure 1 représente une vue en coupe axiale d'un premier mode de réalisation du témoin d'usure suivant l'invention ;
- la figure 2 est une vue éclatée qui illustre les opérations de montage du témoin de la figure 1, sur une plaque porte-garniture d'un organe de friction de frein de véhicule automobile ;
- les figures 3 à 7 représentent, en coupe axiale, cinq autres modes de réalisation de témoins d'usure suivant l'invention.

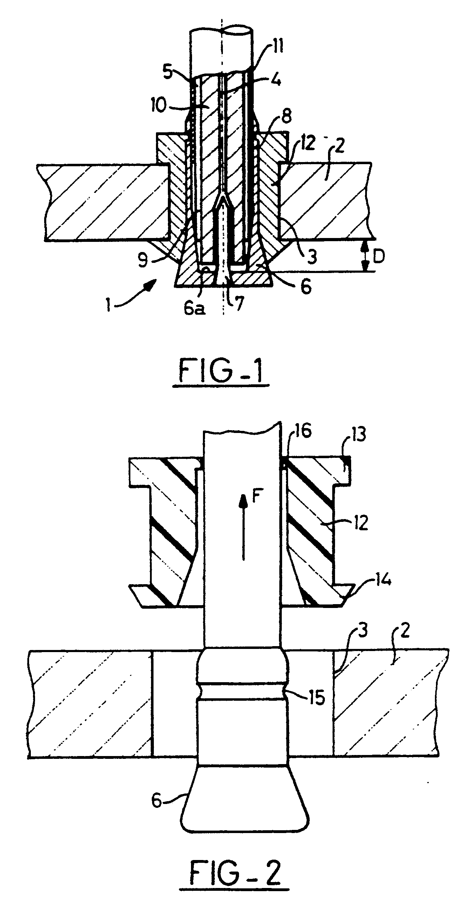

On se réfère à la figure 1 du dessin qui représente un témoin d'usure suivant l'invention, repéré généralement 1, fixé sur une plaque porte-garniture 2 d'un organe de friction pour frein de véhicule automobile. Dans la suite, on décrira l'invention dans sa mise en oeuvre pour un frein à disque. Il est clair cependant que l'invention est aussi immédiatement applicable à un organe de friction pour frein à tambour.

Le témoin 1 passe dans un trou 3 percé dans la plaque 2 dans une région de celle-ci qui est écartée d'une garniture de friction portée par cette plaque. Suivant l'invention, le témoin comprend un organe conducteur qui prend la forme d'un câble coaxial constitué de deux conducteurs électriques concentriques, une âme 4 et une gaine 5, respectivement. Un organe de liaison tel qu'une douille 6 établit un contact électrique entre l'âme et la gaine. La douille est réalisée en un matériau conducteur de l'électricité et suffisamment tendre (du zinc par exemple) pour s'user lorsqu'elle entre en contact avec un disque formant partie d'un frein à disque équipé d'organes de friction munis de témoins suivant l'invention. La douille est conformée de manière qu'après mise en place sur la plaque porte-garniture 2, sa surface interne 6a parallèle au plan de rotation du disque soit écartée de la face adjacente de la plaque 2 d'une distance D qui correspond à l'épaisseur minimum tolérée de la garniture de l'organe de friction.

Ainsi, à la suite de freinages successifs ayant usé cette garniture, le disque du frein vient en contact avec l'extrémité de la douille. Suivant une mise en oeuvre du témoin donnée seulement à titre d'exemple, il y a alors mise à la masse des conducteurs 4, 5 et allumage d'un voyant lumineux commandé par un circuit électrique approprié relié à ces conducteurs, uniquement lors des périodes de freinage, pour signaler un début d'usure des garnitures. Si l'usure du témoin se poursuit malgré l'alerte périodique qui se manifeste ainsi, il arrive un moment où l'extrémité de la douille 6 est entièrement usée (le disque s'approche alors de la plaque 2 de la distance D). A ce moment la douille n'établit plus de contact entre l'âme 4 et la gaine 5 du fait qu 'une pointe centrale 7 de contact, formant partie de cette douille et placée en contact électrique avec l'âme 4, est alors coupée de ce qui reste de la douille. Le circuit électrique connecté aux conducteurs 4, 5 du témoin d'usure est alors sensible à cette situation pour déclencher l'émission d'un signal, par excitation d'un voyant d'alerte permanente par exemple. Le conducteur du véhicule est ainsi averti de la nécessité où il se trouve d'avoir à remplacer le ou les organes de friction ayant atteint leur usure limite.

La douille du témoin d'usure de la figure 1 comprend une partie cylindrique 8 qui est sertie sur une partie dénudée 9 de la gaine 5 pour établir un bon contact électrique. La pointe 7 est enfoncée dans un enrobage tel qu'une enveloppe isolante intérieure 10 de manière à assurer un bon contact électrique avec l'âme conductrice 4 protégée par cette enveloppe 10. Une deuxième enveloppe isolante 11, extérieure, assure la protection de l'ensemble du câble coaxial.

On se réfère maintenant à la figure 2 qui illustre les opérations de montage du témoin de la figure 1 sur la plaque porte-garniture 2. Une bague 12, fendue ou semi-fendue, est passée sur le câble, la douille 6 du témoin étant engagée dans le trou 3. Ces organes étant approximativement dans les positions représentées à la figure 2, on engage à force la bague 12 dans le trou 3 en profitant de la déformabilité de cette bague fendue. Une fois celle-ci fixée dans le trou 3 de manière que ses rebords d'extrémités 13 et 14 soient en appui sur deux faces opposées de la plaque 2, on tire sur le câble dans le sens de la flèche F de manière que la douille 6 vienne se coincer dans la bague 12.

La douille 6 est creusée d'une gorge 15 agencée pour coopérer avec une nervure annulaire 16 formée dans l'alésage central de la bague 12 au niveau de sa base voisine du rebord 13. La douille 6 et la bague 12 comprennent des conicités complémentaires d'autoblocage, comme représenté aux figures 1 et 2. On cesse de tirer sur le câble quand cette nervure 16 pénètre dans la gorge 15 de la douille, cette coopération de la nervure avec la gorge définissant la position correcte du témoin sur la plaque 2.

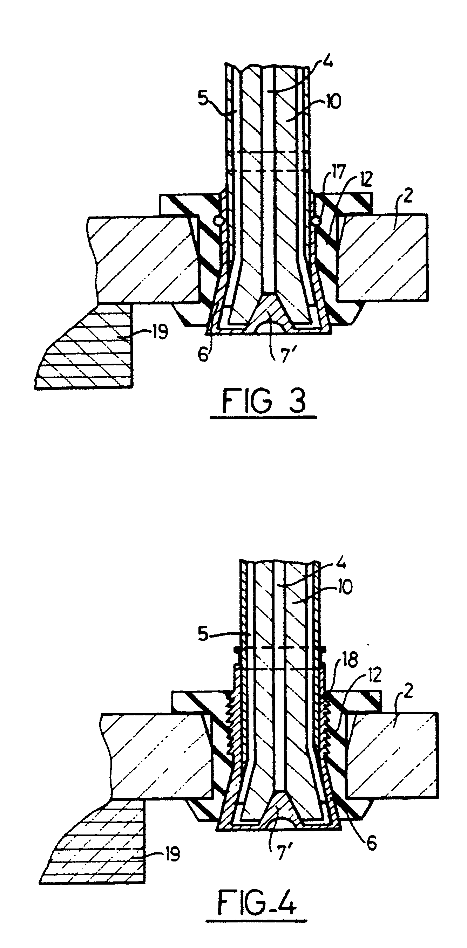

On a représenté aux figures 3 à 7 d'autres modes de réalisation du témoin d'usure suivant l'invention. Sur ces figures des éléments ou organes analogues à ceux du témoin de la figure 1 sont repérés par les mêmes nombres éventuellement affectés de "prime" ou "seconde", et leur description n'est donc pas reprise dans la suite.

Les témoins des figures 3 et 4 sont du même type que celui de la figure 1. A la figure 3 un anneau fendu 17 coopère avec deux gorges annulaires creusées dans la douille 6 et la bague 12 respectivement, pour immobiliser la douille dans cette bague et définir la position finale de fonctionnement de la douille et, en particulier, celle de son extrémité destinée à s'user sous l'action du frottement développé par le disque d'un frein à disque, par exemple.

A la figure 4, des jeux de stries annulaires 18, males et femelles, formées respectivement sur la douille 6 et sur la bague 12 jouent le rôle de l'anneau 17 et des gorges associés du témoin de la figure 4, où celui de la gorge 15 et de la nervure annulaire 16 du témoin de la figure 1.

Sur les figures 3 et 4, on a représenté une partie d'une garniture 19 de friction portée par la plaque porte-garniture 2. Il est clair sur ces figures que le témoin est monté sur cette plaque dans une zone écartée de celle qui reçoit la garniture 19. On ne sortirait cependant pas du cadre de l'invention en disposant le témoin dans une partie de la plaque qui est recouverte par la garniture, moyennant le percement dans cette dernière d'un logement pour ce témoin.

Sur les figures 3 et 4 encore, on a représenté un autre moyen pour établir un contact entre la douille 6 et l'âme 4 conductrice du témoin. Ce moyen consiste en une protubérance centrale 7' qui s'enfonce dans l'isolant 10 pour venir en contact avec cette âme. Cette protubérance joue le rôle de la pointe 7, rapportée, de la douille du témoin de la figure 1.

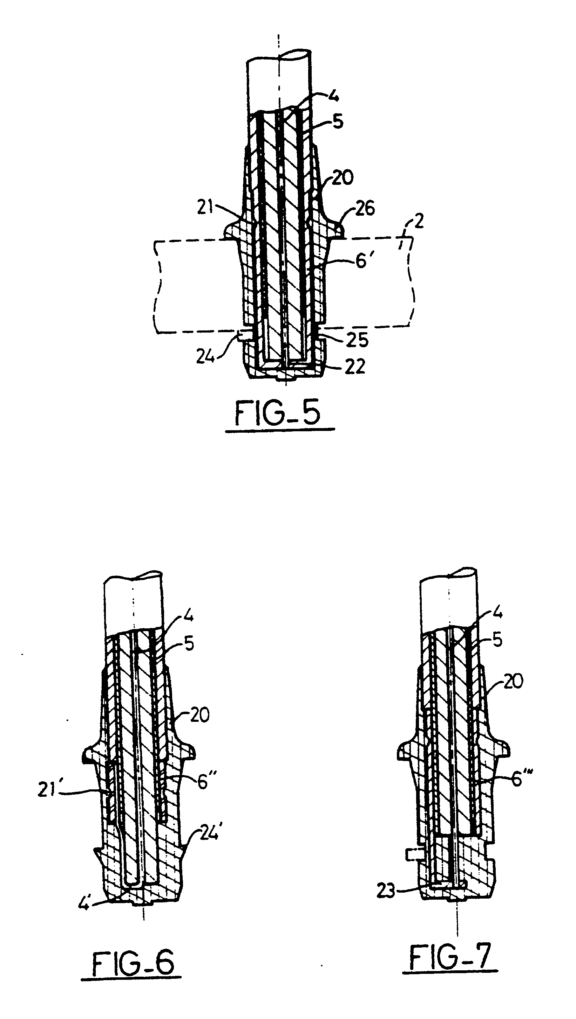

On a représenté aux figures 5 à 7 trois autres modes de réalisation, voisins, du témoin suivant l'invention. Ceux-ci se distinguent essentiellement des modes de réalisation des figures 1 à 4 en ce qu'ils comprennent une enveloppe surmoulée 20 qui joue le rôle de la bague 12 des témoins des figures 1 à 4, pour fixer le témoin sur la plaque porte-garniture.

A la figure 5, le témoin représenté comprend une douille 6' sertie en 21 sur une partie dénudée de la gaine, cette douille étant percée à son extrémité d'un trou axial 22 dans lequel passe l'extrémité dénudée de l'âme conductrice 4 du câble coaxial utilisé dans le témoin suivant l'invention. Une soudure peut parfaire la liaison électrique de l'âme 4 et de la douille 6, au niveau du trou 22.

A la figure 6, une partie dénudée de l'âme 4 est repliée sur l'isolant du câble, le contact électrique entre l'âme 4 et la gaine 5 étant assurée par une douille en forme de bague métallique 6" sertie en 21'. Dans ce mode de réalisation, c'est l'usure de la partie 4' de l'âme 4 repliée sur l'extrémité du câble coaxial qui provoque l'ouverture du circuit électrique 4,5 et la détection de l'usure limite de la garniture associée.

A la figure 7 on a représenté une variante du mode de réalisation de la figure 5, dans laquelle l'extrémité 23' de la douille 6''' est sensiblement demi-circulaire, ce qui permet l'insertion de l'extrémité dénudée de l'âme 4 dans une fente découpée dans cette extrémité, plutôt que dans un trou. La mise en place de l'âme dans la douille s'en trouve facilitée.

Pour les modes de réalisation des figures 5 à 7, une fois la douille montée sur le câble coaxial de manière à établir une continuité électrique entre l'âme et la gaine, une enveloppe 20 en matière plastique est surmoulée sur la douille et l'extrémité du câble, avec la géométrie représentée à ces figures. L'enveloppe 20 comprend des moyens tels qu'une butée annulaire 26 destinée à venir en appui sur la face de la plaque porte-garniture 2 qui ne porte pas cette garniture, pour définir la distance D qui sépare l'extrémité du témoin de la face adjacente de la plaque 2, à l'usure limite de la garniture.

Les témoins des figures 5 à 7 sont de mise en place plus facile que ceux des figures 1 à 4, en ce qu'ils n'exigent pas l'utilisation d'une bague fendue telle que la bague 12.

Il suffit d'insérer le témoin conforme à l'une quelconque des figures 5 à 7 dans le trou prévu pour le recevoir. Il y est retenu alors par des moyens d'arrêt tels qu'un circlips 24 qui est inséré dans une gorge annulaire 25 venue de moulage avec l'enveloppe 20 (Fig. 5 et 7). Suivant une autre solution représentée à la Figure 6, ce circlips et cette gorge sont remplacés par un redan d'enclipsage 24' qui traverse à force le trou 3 de la plaque porte-garniture pour s'opposer ensuite à l'extraction du témoin hors de ce trou.

On réalise ainsi grâce à l'invention des témoins d'usure du type à boucle ou à "fil double" qui font une application inattendue d'un câble coaxial bien connu dans d'autres applications, où l'âme et la gaine sont, au contraire de ce qui est établi dans les témoins suivant l'invention, soigneusement isolés l'un de l'autre. Les témoins ainsi obtenus sont simples, peu coûteux à réaliser et de mise en place facile du fait que la symétrie axiale du câble utilisé se prête à une réalisation entièrement symétrique qui convient bien pour une fixation dans un trou circulaire d'une plaque porte-garniture d'organe de friction pour frein de véhicule automobile. En outre la douille du témoin suivant l'invention peut être réalisée en un matériau plus tendre que celui des fils conducteurs, pour faciliter ainsi la coupure par usure de l'organe conducteur du témoin, à l'usure limite de l'organe de friction.

**Revendications**

1. Témoin d'usure d'un organe de friction pour frein de véhicule automobile, conçu pour être monté sur l'organe de friction de manière qu'un organe conducteur de l'électricité formant partie du témoin soit attaqué par une pièce rotative formant partie du frein quand l'organe de friction atteint une épaisseur inférieure à une valeur prédéterminée du fait de son usure par cette pièce rotative, l'organe conducteur passant tangentiellement dans le plan d'usure maximale tolérée de l'organe de friction, et comprenant deux conducteurs (4, 5) électriques coaxiaux caractérisés en ce que lesdits deux conducteurs (4, 5) sont constitués l'un d'une âme conductrice (4) protégée par une enveloppe isolante (10), l'autre d'une gaine conductrice (5) entourant ladite enveloppe isolante (11), ces deux conducteurs étant reliés l'un à l'autre au moyen d'une douille (6) électriquement conductrice entourant ladite gaine conductrice (5) et en contact avec ladite âme conductrice (4).

2. Témoin conforme à la revendication 1, caractérisé en ce que la douille (6), est noyée dans une enveloppe (20) surmoulée en matière plastique, cette enveloppe comprenant des moyens de butée (26), pour définir la position axiale du témoin sur l'organe de friction.

3. Témoin conforme à la revendication 2, conçu pour être monté dans un trou (3) percé dans une plaque porte-garniture (2) d'un organe de friction, caractérisé en ce que ces moyens de butée comprennent une butée annulaire (26), agencé pour s'appuyer sur la face de cette plaque (2) qui est opposée à celle de laquelle déborde l'extrémité du témoin.

4. Témoin conforme à la revendication 3, caractérisé en ce qu'il comprend des moyens d'arrêt (24,25) pour immobiliser le témoin dans la position axiale définie par les moyens de butée.

5. Témoin conforme à la revendication 4, caractérisé en ce que ces moyens d'arrêt sont constitués par un circlips (24) logés dans une gorge annulaire (25) creusée dans l'enveloppe (20).

6. Témoin conforme à la revendication 4, caractérisé en ce que ces moyens d'arrêt sont constitués par un redan (24') annulaire souple venu de moulage avec l'enveloppe.

7. Témoin conforme à l'une quelconque des revendications précédentes, caractérisé en ce que l'organe conducteur comprend une âme (4) axiale protégée par un enrobage (10) isolant dont la surface extérieure porte une gaine conductrice (5) coaxiale à l'âme (4), la douille (6) connectant des parties dénudées de l'âme et de la gaine.

8. Témoin conforme à la revendication 7, caractérisé en ce qu'un sertissage (21) assure le contact de la douille (6) et de la gaine (5).

9. Témoin conforme à l'une quelconque des revendications 7 et 8, caractérisé en ce que la douille présente une partie d'extrémité dans laquelle est passée l'extrémité dénudée de l'âme (4) de manière à assurer le contact électrique de cette partie et de l'âme.

10. Témoin conforme à l'une quelconque des revendications 7 et 8, caractérisé en ce qu'une longueur dénudée de l'âme est repliée contre l'enrobage isolant (10) de manière à venir en contact avec une partie dénudée de la gaine, la douille (6) prenant alors la forme d'une bague sertie sur l'organe conducteur pour assurer le contact électrique de la gaine et de l'âme.

11. Témoin conforme à la revendication 1, conçu pour être monté dans un trou (3) percé dans une plaque porte-garniture (2) formant partie d'un organe de friction, caractérisé en ce qu'il comprend une bague (12) pour fixer la douille (6) dans le trou (3) par serrage.

12. Témoin conforme à la revendication 11, caractérisé en ce que la douille (6) et la bague (12) comprennent des conicités complémentaires d'autoblocage.

13. Témoin conforme à l'une quelconque des revendications 11 et 12, caractérisé en ce que la position axiale du témoin dans le trou (3) est définie par la coopération d'une gorge (15) et d'une nervure (16) annulaires et complémentaires formées sur la douille (6) et sur la bague (12) respectivement, ou inversement.

14. Témoin conforme à l'une quelconque des revendications 11 à 13, caractérisé en ce que la position axiale du témoin dans le trou (3) est définie par un anneau fendu (17) coopérant avec des gorges complémentaires formées sur la bague et la douille, respectivement.

15. Témoin conforme à l'une quelconque des revendications 11 à 13, caractérisé en ce que la position axiale du témoin dans le trou (3) est définie par deux jeux de stries annulaires et complémentaires (18) formées sur la bague et la douille, respectivement.

16. Témoin conforme à l'une quelconque des revendications 11 à 15, caractérisé en ce que la bague (12) est fendue pour faciliter son insertion dans le trou (3).

17. Témoin conforme à l'une quelconque des revendications 11 à 16, caractérisé en ce que la douille comprend une pointe (7, 7') pour assurer le contact électrique avec l'âme.

18. Témoin conforme à la revendication 17, caractérisé en ce que la pointe (7) est rapportée.

19. Témoin conforme à l'une quelconque des revendications 1 à 18, caractérisé en ce qu'il comprend des moyens électriques de raccordement à un circuit électrique d'essai et d'alerte.

20. Organe de friction équipé d'un témoin d'usure conforme à l'une quelconque des revendications 1 à 19, pour frein à disque ou à tambour de véhicule automobile.

## Ansprüche

1. Verschleißanzeiger eines Reibungselementes für Kraftfahrzeugbremse, der so ausgebildet ist, daß er an einem Reibungselement so angebracht wird, daß ein einen Teil des Anzeigers bildendes elektrisch leitendes Element von einem einen Teil der Bremse bildenden rotierenden Teil aktiviert wird, wenn das Reibungselement aufgrund seines durch dieses rotierende Element bewirkten Verschleißes eine Dicke erreicht, die kleiner als ein vorgegebener Wert ist, wobei das leitende Element in der Ebene maximal tolerierten Verschleißes des Reibungselementes tangential geführt wird und zwei koaxiale elektrische Leiter (4, 5) umfaßt, dadurch gekennzeichnet, daß die zwei Leiter (4, 5) einerseits von einer leitenden Seele (4), die durch eine isolierende Umhüllung (10) geschützt ist, und andererseits von einer leitenden Hülle (5), die die isolierende Umhüllung (10) umgibt, gebildet werden, wobei diese zwei Leiter miteinander mittels einer elektrisch leitenden Buchse (6) verbunden sind, die die leitende Hülle (5) umgibt und mit der leitenden Seele (4) in Kontakt ist.

2. Anzeiger gemäß Anspruch 1, dadurch gekennzeichnet, daß die Buchse (6) in einer mit Plastikmaterial ausgegossenen Umhüllung (20) versenkt ist, wobei diese Umhüllung Anschlagmittel (26) umfaßt, um die axiale Position des Anzeigers am Reibungselement zu definieren.

3. Anzeiger gemäß Anspruch 2, der so ausgebildet ist, daß er in einem in einer Belagträgerplatte (2) eines Reibungselementes ausgesparten Loch (3) angebracht ist, dadurch gekennzeichnet, daß diese Anschlagmittel einen ringförmigen Anschlag (26) umfassen, der so angeordnet ist, daß er sich auf der Seite dieser Platte (2) abstützt, die derjenigen gegenüberliegt, aus der das Ende des Anzeigers vorsteht.

4. Anzeiger gemäß Anspruch 3, dadurch gekennzeichnet, daß er Sperrmittel (24, 25) umfaßt, um den Anzeiger in der durch die Anschlagmittel definierten axialen Position unbeweglich zu machen.

5. Anzeiger gemäß Anspruch 4, dadurch gekennzeichnet, daß die Sperrmittel durch einen Sicherungsring (24) gebildet werden, der in eine in der Umhüllung (20) ausgetiefte Ringnut (25) eingesetzt ist.

6. Anzeiger gemäß Anspruch 4, dadurch gekennzeichnet, daß die Sperrmittel durch eine elastische, ringförmige Stufe (24') gebildet werden, die beim Formen der Umhüllung ausgebildet wird.

7. Anzeiger gemäß einem der vorangehenden Ansprüche, dadurch gekennzeichnet, daß das leitende Element eine axiale Seele (4) umfaßt, die durch eine isolierende Ummantelung (10) geschützt wird, deren äußere Oberfläche eine zur Seele (4) koaxiale, leitende Hülle (5) trägt, wobei die Buchse (6) die abisolierten Teile der Seele und der Hülle verbindet.

8. Anzeiger gemäß Anspruch 7, dadurch gekennzeichnet, daß eine Quetschverbindung (21) den Kontakt der Buchse (6) mit der Hülle (5) gewährleistet.

9. Anzeiger gemäß einem der Ansprüche 7 und 8, dadurch gekennzeichnet, daß die Buchse einen Endteil aufweist, in dem das abisolierte Ende der Seele (4) so geführt wird, daß der elektrische Kontakt dieses Teils mit der Seele gewährleistet wird.

10. Anzeiger gemäß einem der Ansprüche 7 und 8, dadurch gekennzeichnet, daß eine abisolierte Länge der Seele zur isolierenden Ummantelung (10) umgebogen wird, derart, daß sie mit einem abisolierten Teil der Hülle in Kontakt gelangt, wobei die Buchse (6) nun die Form eines auf das leitende Element gepreßten Rings annimmt, um den elektrischen Kontakt der Hülle mit der Seele zu gewährleisten.

11. Anzeiger gemäß Anspruch 1, der so ausgebildet ist, daß er in einem in einer einen Teil eines Reibungselementes bildenden Belagträgerplatte (2) ausgesparten Loch (3) angebracht wird, dadurch gekennzeichnet, daß er einen Ring (12) umfaßt, um die Buchse (6) im Loch (3) mittels Pressung zu befestigen.

12. Anzeiger gemäß Anspruch 11, dadurch gekennzeichnet, daß die Buchse (6) und der Ring (12) selbstblockierende komplementäre Konizitäten umfassen.

13. Anzeiger gemäß einem der Ansprüche 11 und 12, dadurch gekennzeichnet, daß die axiale Position des Anzeigers im Loch (3) durch das Zusammenwirken einer Nut (15) und einer Rippe (16) definiert wird, die an der Buchse (6) bzw. am Ring (12) oder umgekehrt ringförmig und komplementär ausgebildet sind.

14. Anzeiger gemäß einem der Ansprüche 11 bis 13, dadurch gekennzeichnet, daß die axiale Position des Anzeigers im Loch (3) durch einen geschlitzten Ring (17) definiert wird, der mit den am Ring bzw. an der Buchse ausgebildeten komplementären Nuten zusammenwirkt.

15. Anzeiger gemäß einem der Ansprüche 11 bis 13, dadurch gekennzeichnet, daß die axiale Position des Anzeigers im Loch (3) durch zwei Sätze von ringförmigen und komplementären Griffflächen (18) definiert wird, die am Ring bzw. an der Buchse ausgebildet sind.

16. Anzeiger gemäß einem der Ansprüche 11 bis 15, dadurch gekennzeichnet, daß der Ring (12) geschlitzt ist, um sein Einsetzen in das Loch (3) zu erleichtern.

17. Anzeiger gemäß einem der Ansprüche 11 bis 16, dadurch gekennzeichnet, daß die Buchse eine Spitze (7, 7') umfaßt, um den elektrischen Kontakt mit der Seele zu gewährleisten.

18. Anzeiger gemäß Anspruch 17, dadurch gekennzeichnet, daß die Spitze (7) aufgesteckt ist.

19. Anzeiger gemäß einem der Ansprüche 1 bis 18, dadurch gekennzeichnet, daß er Mittel zur elektrischen Verbindung mit einer elektrischen Prüf- und Alarmschaltung umfaßt.

20. Reibungselement für eine Kraftfahrzeug-Scheibenbremse oder -Trommelbremse, das mit einem Verschleißanzeiger gemäß einem der Ansprüche 1 bis 19 ausgerüstet ist.

## Claims

1. Wear indicator of a friction member for automobile vehicle brake, designed to be mounted on the friction member so that an electrically conductive member forming part of the indicator is rubbed against by a rotating member forming part of the brake when the friction member reaches a thickness less than a predetermined value due to its wear by this rotating member, the conductor member passing tangentially in the plane of maximum permissible wear of the friction member, and comprising two coaxial electrical conductors (4, 5), characterized in that the said conductors (4, 5) consist one of a conductive core (4) protected by an insulating casing (10) and the other of a conductive sleeve (5) surrounding the said insulating casing (10), these two conductors being connected to one another by means of an electrically conductive socket (6) surrounding the said conductive sleeve (5) and in contact with the said conductive core (4).

2. Indicator according to Claim 1, characterized in that the socket (6) is embedded in a casing (20) overmolded in plastic material, this casing comprising means of abutment (26), to define the axial position of the indicator on the friction member.

3. Indicator according to Claim 2, designed to be mounted in a hole (3) drilled in a lining carrier plate (2) of a friction member, characterized in that these means of abutment comprise an annular abutment (26), arranged to press against the face of this plate (2) which is opposite to that from which the end of the indicator protrudes.

4. Indicator according to Claim 3, characterized in that it comprises means of holding (24, 25) to lock the indicator in the axial position defined by the means of abutment.

5. Indicator according to Claim 4, characterized in that these means of holding are made up of a circlip (24) lodged in an annular groove (25) hollowed out in the casing (20).

6. Indicator according to Claim 4, characterized in that these means of holding are made up of a flexible annular step (24') molded in one piece with the casing.

7. Indicator according to any one of the preceding claims, characterized in that the conductor member comprises an axial core (4) protected by an insulating coating (10) whose external surface has a conducting sleeve (5) coaxial with the core (4), the socket (6) connecting the bared parts of the core and of the sleeve.

8. Indicator according to Claim 7, characterized in that a crimping (21) ensures the contact of the socket (6) and the sleeve (5).

9. Indicator according to either one of Claims 7 and 8, characterized in that the socket has an end part in which the bared end of the core (4) is passed so as to ensure the electrical contact of this part and of the core.

10. Indicator according to any one of Claims 7 and 8, characterized in that a bared length of the core is folded back against the insulating coating (10) so as to come into contact with a bared part of the sleeve, the socket (6) then taking the form of a bush crimped on the conductor member to ensure the electrical contact of the sleeve and of the core.

11. Indicator according to Claim 1, designed to be mounted in a hole (3) drilled in a lining carrier plate (2) forming part of a friction member, characterized in that it comprises a bush (12) for fixing the socket (6) in the hole (3) by gripping.

12. Indicator according to Claim 11, characterized in that the socket (6) and the bush (12) comprise complementary self-locking tapers.

13. Indicator according to either one of Claims 11 and 12, characterized in that the axial position of the indicator in the hole (3) is defined by the interaction of a groove (15) and a fillet (16), annular and complementary, formed respectively on the socket (6) and on the bush (12) or vice versa.

14. Indicator according to any one of Claims 11 to 13, characterized in that the axial position of the indicator in the hole (3) is defined by a split ring (17) interacting with complementary grooves formed respectively on the bush and on the socket.

15. Indicator according to any one of Claims 11 to 13, characterized in that the axial position of the indicator in the hole (3) is defined by two sets of ridges annular and complementary (18), formed respectively on the bush and on the socket.

16. Indicator according to any one of Claims 11 to 15, characterized in that the bush (12) is split to aid its insertion in the hole (3).

17. Indicator according to any one of Claims 11 to 16, characterized in that the socket comprises a tip (7, 7') to ensure the electrical contact with the core.

18. Indicator according to Claim 17, characterized in that the tip (7) is added on.

19. Indicator according to any one of Claims 1 to 18, characterized in that it comprises electrical means of connection to an electrical test and warning circuit.

20. Friction memher equipped with a wear indicator according to any one of Claims 1 to 19, for disc or drum brake of automobile vehicle.

FIG - 1

FIG - 2

FIG 3

FIG.4

FIG_5

FIG_6

FIG_7